# FASCICULE DE BREVET EUROPEEN

(11) **EP 3 382 495 B1**
(45) Date de publication et mention de la délivrance du brevet: **10.06.2020**
(21) Numéro de dépôt: 18163783.6
(22) Date de dépôt: 23.03.2018
(51) Int. Cl.: G05G 5/03, B60K 35/00, B60K 37/06

(54) **DISPOSITIF DE COMMANDE POUR HABITACLE DE VÉHICULE**
STEUERVORRICHTUNG FÜR FAHRZEUGINNENRAUM
CONTROL DEVICE FOR VEHICLE PASSENGER COMPARTMENT

(30) Priorité: 27.03.2017 FR 1752542
(43) Date de publication de la demande: 03.10.2018
(73) Titulaire: DAV, 94046 Créteil Cedex (FR)
(72) Inventeur: TISSOT, Jean-Marc, 94046 Créteil CEDEX (FR)
(74) Mandataire: Delplanque, Arnaud

(56) Documents cités:
- WO-A1-2015/033034
- WO-A1-2015/033035
- WO-A1-2016/016588
- WO-A1-2016/071634
- FR-A1- 3 026 501
- FR-A1- 3 040 927
- FR-A1- 3 040 928

## Description

La présente invention concerne un dispositif de commande, en particulier pour un habitacle de véhicule automobile tel que connu de WO 2015/033034 A1.

Les véhicules présentent un nombre important de fonctions à régler telles que la climatisation, un système audio, un assistant de navigation. Ces fonctions peuvent en outre présenter chacune plusieurs paramètres, par exemple pour une climatisation un usager du véhicule peut contrôler la température du flux d'air, l'intensité du flux d'air, son origine (air extérieur, air intérieur recyclé) et sa direction ou son origine à partir de différentes sorties (sur le pare-brise, vers le haut du corps de l'utilisateur, sur le bas du corps de l'utilisateur etc.).

Pour contrôler ces paramètres, on peut soit utiliser de multiples dispositifs de commandes avec des organes de commande actionnés par l'utilisateur en rotation (molettes) ou en translation (boutons poussoirs), chacun dédiés à une fonction ou famille de fonctions du véhicule, soit intégrer un module d'interface avec un écran et des menus défilants.

Les modules d'interface avec un menu défilant permettent de contrôler un grand nombre de fonctions avec un module de commande compact, mais la navigation dans les menus requiert l'attention du conducteur durant parfois plusieurs secondes. Ces secondes d'inattention peuvent représenter un danger d'accident lors de la circulation puisque le conducteur n'est alors plus concentré sur l'environnement et en particulier les autres usagers de la route.

Les dispositifs de commande tels que les molettes et boutons poussoirs permettent un accès direct aux fonctions qu'ils contrôlent mais ils ne peuvent contrôler chacun qu'un nombre réduit de paramètres.

Par exemple pour contrôler la climatisation il faudra prévoir généralement au moins trois dispositifs de commande : un dispositif de commande pour la température, un autre pour l'intensité de la soufflerie et un autre pour la commande de volets de distribution pour sélectionner une sortie d'air privilégiée.

Cette multiplication des dispositifs de commandes entraîne un encombrement important de l'habitacle et plus particulièrement de la console centrale, la surface de la planche de bord située entre le conducteur et le passager avant, qui est l'endroit privilégié pour la disposition de ces dispositifs de commandes.

La tendance esthétique est en outre à une épuration des lignes de l'habitacle, de sorte que la multiplication des dispositifs de commandes est indésirable dans la console centrale qui, étant en permanence dans le champ de vision du conducteur et du passager, sert de « signature » en termes d'esthétique pour le constructeur du véhicule.

Il est donc souhaitable de réaliser des dispositifs de commandes permettant un accès direct aux différents paramètres des fonctions réglables du véhicule tout en présentant un encombrement minimal en termes de surface occupée.

Afin de résoudre au moins partiellement le problème précédemment mentionné, l'invention a pour objet un dispositif de commande comprenant un organe de préhension mobile en rotation autour d'un axe de rotation, et un capteur de rotation dudit organe de préhension, caractérisé en ce que l'organe de préhension comporte au moins deux zones de préhensions distinctes disposées l'une à côté de l'autre et destinées à être actionnées pour mettre en rotation l'organe de préhension, et au moins un capteur tactile associé à une des zones de préhension et configuré pour détecter un actionnement par un utilisateur interagissant avec la zone de préhension associée.

On obtient ainsi un dispositif de commande permettant le contrôle direct de plusieurs fonctions, de façon potentiellement plus compacte et moins coûteuse, puisqu'un seul dispositif de guidage et d'indexage en rotation suffit.

Ledit dispositif de commande peut présenter une ou plusieurs des caractéristiques suivantes, prises seules ou en combinaison.

Chaque zone de préhension possède une forme de bande cylindrique.

Le dispositif de commande comporte trois zones de préhension.

L'organe de préhension comporte une molette circulaire étagée et chaque étage de la molette circulaire étagée est associé à une zone de préhension correspondante.

Le au moins un capteur tactile est réalisé sous forme de détecteur capacitif.

Le au moins un capteur tactile comporte plusieurs électrodes disposées chacune sur une zone de préhension distincte.

Toutes les zones de préhension sauf une sont pourvues de capteurs tactiles.

Toutes les zones de préhension sont pourvues de capteurs tactiles et il comporte une unité de contrôle configurée pour faire basculer le dispositif de commande d'un état de veille à un état actif de commande.

Le dispositif de commande comporte en outre un organe de commande en translation, mobile en translation axiale entre au moins une position de repos et une position d'enfoncement.

L'organe de préhension est aussi mobile en translation axiale pour former un organe de commande en translation mobile en translation axiale entre au moins une position de repos et une position d'enfoncement.

Le dispositif de commande comporte en outre un dispositif d'affichage disposé au niveau de l'organe de préhension et dont un état d'affichage est contrôlé par une unité de contrôle.

Le dispositif d'affichage est configuré pour afficher une donnée relative au paramètre contrôlé par l'actionnement d'une des zones de préhension lorsque l'utilisateur est en contact avec ladite zone de préhension.

Le dispositif d'affichage comporte une source lumineuse, un guide de lumière et une surface d'affichage comportant un motif visuel, surface d'affichage vers laquelle le guide de lumière guide de la lumière issue de la source lumineuse.

Le dispositif de commande comporte un écran à cristaux liquides, à diodes électroluminescentes organiques ou à transistors en couches minces.

Il comporte en outre :
- un module de retour haptique pouvant fournir au moins deux profils de retour haptique différents,
- une unité de contrôle définissant le profil de retour haptique fourni par le module de retour haptique, configurée pour modifier le profil de retour haptique en fonction de la zone de préhension actionnée par l'utilisateur.

Le module de retour haptique est un module de retour haptique à fluide magnétorhéologique comportant un fluide magnétorhéologique disposé entre un élément mobile solidaire de l'organe de préhension et un élément fixe solidaire d'un châssis sur lequel le dispositif de commande est disposé, et au moins un électroaimant alimenté par l'unité de contrôle pour définir le profil de retour haptique.

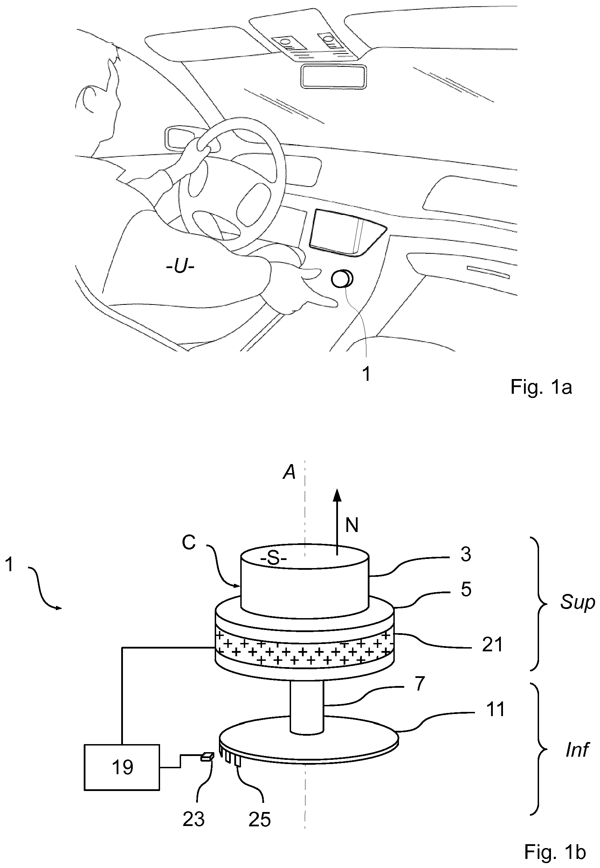

D'autres caractéristiques et avantages de l'invention apparaîtront plus clairement à la lecture de la description suivante, donnée à titre d'exemple illustratif et non limitatif, et des dessins annexés parmi lesquels :
- la figure la montre schématiquement un intérieur de véhicule automobile comprenant un dispositif de commande,
- a figure 1b montre schématiquement en perspective un dispositif de commande selon un premier mode de réalisation de l'invention,
- la figure 2 montre schématiquement en perspective un dispositif de commande selon un second mode de réalisation de l'invention,
- la figure 3 montre une vue en coupe partielle d'un exemple de mode de réalisation de dispositif de commande comportant un module de retour haptique,
- la figure 4 montre un graphe de différents profils haptiques pour un dispositif de commande tel que représenté en figure 3,
- les figures 5 et 6 montrent schématiquement en perspective des organes de préhension de dispositifs de commandes selon l'invention de la figure 3,
- la figure 7 montre un dispositif d'affichage de dispositif de commande en cours d'utilisation,
- la figure 8 montre en vue de profil un organe de préhension de dispositif de commande selon un autre mode de réalisation alternatif.

Sur toutes les figures, les mêmes références se rapportent aux mêmes éléments.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

En figure la est montré de façon schématique un dispositif de commande 1 dans un habitacle de véhicule, ici en particulier au niveau de la console centrale.

Le dispositif de commande 1 est installé dans la console centrale du véhicule : la paroi du panneau avant verticale ou inclinée, située entre le conducteur et le passager à l'avant du véhicule. Cet emplacement permet au conducteur, qui est ici l'utilisateur U du dispositif de commande 1, d'interagir aisément avec le dispositif de commande 1 tout en l'ayant en périphérie de son champ de vision en situation normale de conduite.

Un tel dispositif de commande 1 permet la commande d'au moins une fonction d'un organe du véhicule automobile telle que la commande des fonctions d'un système de climatisation, d'un système audio, d'un système de téléphonie ou encore d'un système de navigation. Le dispositif de commande 1 peut également servir pour les commandes de lève-vitres, de positionnement des rétroviseurs extérieurs ou encore pour le déplacement de sièges motorisés ou pour commander des lumières intérieures, un verrouillage central, un toit ouvrant, les feux de détresse ou les lumières d'ambiance.

En figure 1b est montré de façon schématique un premier mode de réalisation de dispositif de commande 1, en particulier pour habitacle de véhicule selon l'invention.

Le dispositif de commande 1 peut être divisé en deux parties superposées axialement l'une au-dessus de l'autre, respectivement supérieure *Sup* et inférieure *Inf.* La partie supérieure *Sup* comporte un organe de préhension *C* que l'utilisateur met en mouvement en rotation autour d'un axe *A* formant axe de symétrie de révolution. L'organe de préhension *C* comprend deux molettes 3, 5. La partie supérieure *Sup* est destinée à être apparente dans l'habitacle du véhicule. La partie inférieure *Inf* comprend les éléments que l'utilisateur n'est pas destiné à manipuler directement et est destinée à être intégrée dans un châssis ou derrière un panneau ou une planche de bord de l'habitacle du véhicule de manière à être invisible pour l'utilisateur.

Le dispositif de commande 1 présente une surface frontale S qui est dirigée vers l'utilisateur et permet de définir au moins localement une normale N orientée vers ledit utilisateur. Les termes au-dessus et au-dessous tels qu'utilisés ici sont définis en utilisant la normale N comme référence.

Le dispositif de commande 1 selon l'invention comporte ici un organe de préhension *C* formant la partie supérieure *Sup* sous forme de molette étagée, comportant deux zones de préhension distinctes, qui divisent cet organe de préhension *C* en deux étages formant des molettes circulaires 3, 5 solidaires en rotation. Les molettes circulaires 3, 5 sont disposées de façon concentrique l'une au dessus de l'autre, et concentrique avec un arbre 7, qui part d'une surface inférieure de la molette 5 la plus basse, et autour duquel les molettes circulaires 3, 5 sont actionnées en rotation par un utilisateur pour modifier les paramètres et fonctions du véhicule que contrôle le dispositif de commande 1.

La première molette circulaire 3, la deuxième molette circulaire 5 et l'arbre 7 peuvent être réalisés d'une seule pièce, par exemple par moulage par injection. L'organe de préhension *C* du dispositif de commande 1 peut ainsi être obtenu selon un procédé de fabrication rapide et peu coûteux.

L'arbre 7, qui part d'une surface inférieure de la molette 5 la plus basse est relié à un plateau mobile 11 qui entre en rotation lorsque l'organe de préhension *C* est mis en rotation par l'utilisateur.

La partie inférieure *Inf* du dispositif de commande 1 comporte en outre une unité de contrôle 19. L'unité de contrôle 19 comporte généralement au moins un processeur et des mémoires électronique, dédiés ou intégrés dans un circuit global du véhicule. L'unité de contrôle 19 peut, par l'utilisation de transistors et dispositifs de commandes électroniques, contrôler des fonctions du véhicule.

L'unité de contrôle 19 est reliée à au moins un capteur tactile 21 disposé sur l'organe de préhension *C,* et associé à au moins une des zones de préhension correspondant aux molettes 3, 5. Le mode de réalisation de la figure 1 comporte un seul capteur tactile 21, réalisé sous forme de détecteur capacitif dont une électrode est disposée sur une jupe de la molette inférieure. Le capteur tactile 21 détecte l'actionnement par l'utilisateur de la zone de préhension de la deuxième molette 5 sur laquelle l'électrode est disposée.

L'unité de contrôle 19 est aussi reliée à un capteur de rotation 23, 25 intégré dans la partie inférieure *Inf* du module de commande 1. Le capteur de rotation 23, 25 détecte et quantifie la rotation relative de l'organe de préhension *C.* Le capteur de rotation 23, 25 comporte des parties fixes 23 et mobiles 25 coopérant ensemble, ici un capteur optique 23 fixe par rapport au plateau mobile 11, et des panneaux obturateurs 25 portés par la périphérie du plateau mobile 11. Lorsque le plateau mobile 11 est entraîné en rotation par l'organe de préhension *C*, les panneaux obturateurs 25 interrompent un faisceau optique dirigé vers le capteur optique 23 qui interprète les chutes de luminosité et utilise le nombre de chutes de luminosité pour estimer l'amplitude de la rotation.

Ainsi, si l'unité de contrôle 19 reçoit du capteur de rotation 23, 25 un signal correspondant à la rotation de l'organe de préhension *C*, mais pas de signal de la part du capteur tactile 21, l'unité de contrôle 19 modifie un premier paramètre de fonction du véhicule associé à la molette supérieure 3 qui ne porte pas le détecteur tactile 21.

En revanche si l'unité de contrôle 19 reçoit du capteur de rotation 23, 25 un signal correspondant à la rotation de l'organe de préhension *C*, et un signal de la part du capteur tactile 21 correspondant à un contact de l'utilisateur avec la molette portant ledit capteur tactile 21, l'unité de contrôle 19 modifie un second paramètre de fonction du véhicule, éventuellement d'une fonction différente de la précédente, associé à la molette inférieure 5 qui porte le capteur tactile 21.

Ainsi le dispositif de commande 1 permet le contrôle direct de deux ou plus paramètres de fonctions du véhicule, sans que le conducteur ne doive détourner son attention de la route de façon prolongée.

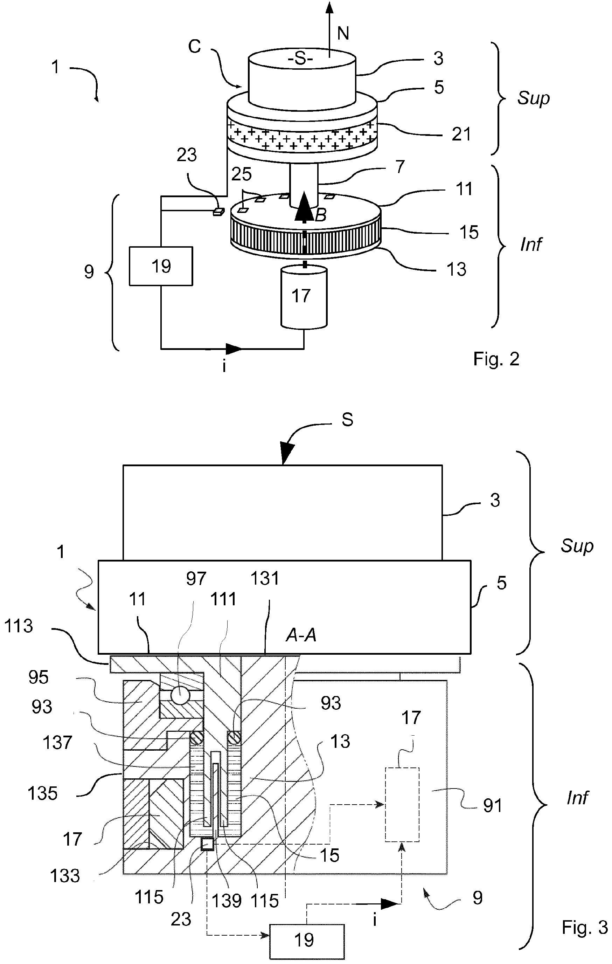

En figure 2 est montré un dispositif de commande 1 selon un autre mode de réalisation, qui comporte en outre un module de retour haptique 9.

L'organe de préhension *C* formant la partie supérieure *Sup* du dispositif de commande 1 de la figure 2 est sensiblement identique à celle de la figure 1 et comporte une première molette 3 supérieure et une deuxième molette 5 inférieure sur laquelle se trouve un capteur tactile 21. Ces molettes 3, 5 sont reliées à un arbre 7 de la partie inférieure *Inf.*

L'arbre 7 est relié au module de retour haptique 9 qui fournit un effort variable, ici un couple s'opposant à la mise en rotation des molettes 3, 5. Ledit couple variable en fonction de la position de rotation des molettes 3,5 définit un profil de retour haptique perçu par l'utilisateur du dispositif de commande 1. En particulier, le module de retour haptique 9 peut fournir au moins deux profils de retour haptique différents, un pour chaque molette ou zone de préhension 3, 5.

Le module de retour haptique 9 est ici un module haptique à fluide magnétorhéologique. Il comporte un élément mobile 11 solidaire en rotation des molettes 3, 5 via l'arbre 7, ici sous forme de plateau mobile, et un élément fixe 13 solidaire d'un châssis sur lequel le dispositif de commande 1 est disposé, à nouveau ici sous forme de plateau fixe. Le châssis peut par exemple être une paroi de l'habitacle du véhicule ou un logement dans lequel le dispositif de commande 1 est enchâssé.

Entre les deux plateaux mobile 11 et fixe 13 est disposé un fluide magnétorhéologique 15. Par fluide magnétorhéologique 15 on entend ici un fluide dont la viscosité est modifiée par l'application d'un champ magnétique. De tels fluides 15 sont généralement composés d'huiles synthétiques et de particules magnétiques souples, avec éventuellement des agents surfactants pour adapter précisément la viscosité à l'usage voulu.

Le fluide magnétorhéologique 15 fonctionne ici en cisaillement du fait du mouvement relatif des plateaux ou éléments mobile et fixe 11, 13. De manière générale, l'élément mobile 11 et l'élément fixe 13 présentent des formes complémentaires et invariantes par rotation, par exemple un tube mobile et un logement tubulaire fixe correspondant, le fluide magnétorhéologique 15 étant disposé entre les éléments mobile 11 et fixe 13.

D'autres modes de réalisation non-représentés peuvent comporter des modules de retour haptique 9 comportant des freins à friction, avec un mors venant pincer l'arbre 7 ou un disque solidaire de l'arbre 7 ou bien un sabot appuyé en contact frictionnel sur l'arbre 7. Ces modules haptiques 9, qui sont potentiellement moins chers, impliquent cependant des frictions solides et auront donc une durée de vie moindre que les modules de retour haptique 9 à fluide magnétorhéologique 15 où le seul frottement présent est un frottement à l'intérieur du fluide.

Des modes de réalisation de modules de retour haptique 9 à fluide magnétorhéologique 15 non-représentés peuvent aussi utiliser le fluide magnétorhéologique 15 en mode dit valve en utilisant un écoulement du fluide dans un couloir étroit où un champ magnétique variable est exercé. De tels modules de retour haptique 9 utilisent deux chambres de part et d'autre de la valve, dont l'une est compressée lors du mouvement du dispositif de commande 1, ce qui implique une course limitée des molettes 3, 5. L'utilisation du fluide magnétorhéologique 15 en cisaillement permet cependant de contrôler aisément le retour haptique sur plusieurs tours de molette 3, 5.

Pour contrôler la viscosité du fluide magnétorhéologique 15 le module de retour haptique 9 comporte un électroaimant 17, générant un champ magnétique *B* lorsqu'il est alimenté en courant *i* par une unité de contrôle 19. L'unité de contrôle 19 contrôle ainsi l'intensité du champ magnétique *B* en contrôlant l'intensité du courant *i* délivré à l'électroaimant 17.

Des modules de retour haptique 9 comportant plusieurs électroaimants 17 sont bien sûr possibles, et le nombre d'électroaimants 17 alimentés peut alors être utilisé pour moduler le retour haptique.

L'unité de contrôle 19 est aussi reliée à un capteur de rotation 23, 25 intégré dans la partie inférieure *Inf* du module de commande 1. Le capteur de rotation 23, 25 détecte et quantifie la rotation relative de l'organe de préhension *C* formant partie supérieure *Sup* par rapport aux éléments fixes en rotation. Le capteur de rotation 23, 25 comporte ici à titre d' exemple un capteur à effet Hall 23 et des cibles magnétiques 25, le capteur à effet Hall étant solidaire du châssis et les cibles magnétiques 25 étant disposées sur la périphérie de l'élément mobile 11 pour permettre l'évaluation de la position de rotation θ des molettes 3, 5 en évaluant la position de rotation de l'élément mobile 11.

Un mode de réalisation alternatif de capteur de rotation 23, 25 peut comporter des contacts électriques disposés sur l'élément mobile 11 et un ou plusieurs contacts balais solidaires de l'élément fixe 13 ou du châssis, la position de rotation de l'organe de préhension *C* du dispositif de commande 1 étant alors déterminée par les contacts électriques du plateau rotatif 11 en contact électrique avec le ou les contacts balai du plateau fixe 13.

La figure 3 montre plus en détail un mode de réalisation particulier de module de retour haptique 9, en particulier avec un fluide magnétorhéologique 15.

La figure 3 montre un dispositif de commande 1, dont la partie inférieure *Inf* comporte un module de retour haptique 9, dont une paroi extérieure 91 est partiellement non représentée dans le cadre d'une coupe partielle pour montrer plus en détail les éléments intérieurs dudit module de retour haptique 9.

Le module de retour haptique 9 comporte une embase formant l'élément fixe 13, de forme générale tubulaire selon un axe de rotation *A-A* du dispositif de commande 1. L'embase 13 comporte une partie centrale 131 pleine et cylindrique s'étendant autour de l'axe *A-A,* une base en forme de disque 133, et une couronne extérieure 135 de sorte que l'embase 13 comporte un logement tubulaire 137 qui accueille le fluide magnétorhéologique 15. L'embase 13 comporte en outre une lèvre tubulaire 139 selon l'axe *A-A,* disposée dans le logement tubulaire 137.

Le module de retour haptique 9 comporte aussi un élément rotatif 11, de forme générale qui s'emboîte dans l'embase 13, et qui est rigidement relié à l'organe de préhension *C* du dispositif de commande 1. L'élément rotatif 11 comporte une portion tubulaire 111 qui rentre dans le logement tubulaire 137 de façon à être immergée dans le fluide magnétorhéologique 15, et une couronne 113 en forme de disque percé en son centre de sorte à accueillir la partie centrale 131 de l'embase 13 à l'état assemblé du dispositif de commande 1.

La portion tubulaire 111 comporte ici deux lèvres tubulaires 115 concentriques qui se trouvent à l'état assemblé du module 9 de part et d'autre de la lèvre tubulaire 139 de l'embase 13, de sorte à guider le mouvement en rotation de l'organe de préhension *C.*

Des joints toriques 93 ferment le logement tubulaire 137 de part-et-d'autre de la portion tubulaire 111 de l'élément mobile 11 le long d'une limite supérieure dudit logement tubulaire 137. Une couronne supérieure 95 solidaire de l'embase 13 coopère avec les joints toriques 93 en formant un couvercle pour le logement tubulaire 137, et porte un roulement à billes 97 sur lequel repose la couronne 113 de l'élément mobile 11. Le roulement à billes 97 réduit les frottements solides entre l'embase 13 et l'élément mobile 11.

L'électroaimant 17 est ici réalisé sous forme d'une bobine, disposée dans un logement annulaire de l'embase 13 et qui entoure le logement tubulaire 137 dans lequel est disposé le fluide magnétorhéologique 15, ladite bobine 17 étant reliée à l'unité de contrôle 19 qui, en contrôlant le courant *i* entrant dans la bobine 17, contrôle le champ magnétique *B* et donc la viscosité du fluide magnétorhéologique 15.

L'unité de contrôle 19 est ici aussi reliée à un capteur de rotation 23 intégré dans la partie inférieure *Inf,* par exemple un capteur à effet Hall coopérant avec des cibles magnétiques non représentées, disposé sous le logement tubulaire 137, les cibles magnétiques étant alors disposées sur la portion tubulaire 111 de l'élément mobile 11 qui se trouve en vis-à-vis du capteur 23. L'unité de contrôle 19 adapte le retour haptique à la position détectée par le détecteur 23 en modifiant la viscosité du fluide 15, en particulier autour de positions d'indexage prédéterminées.

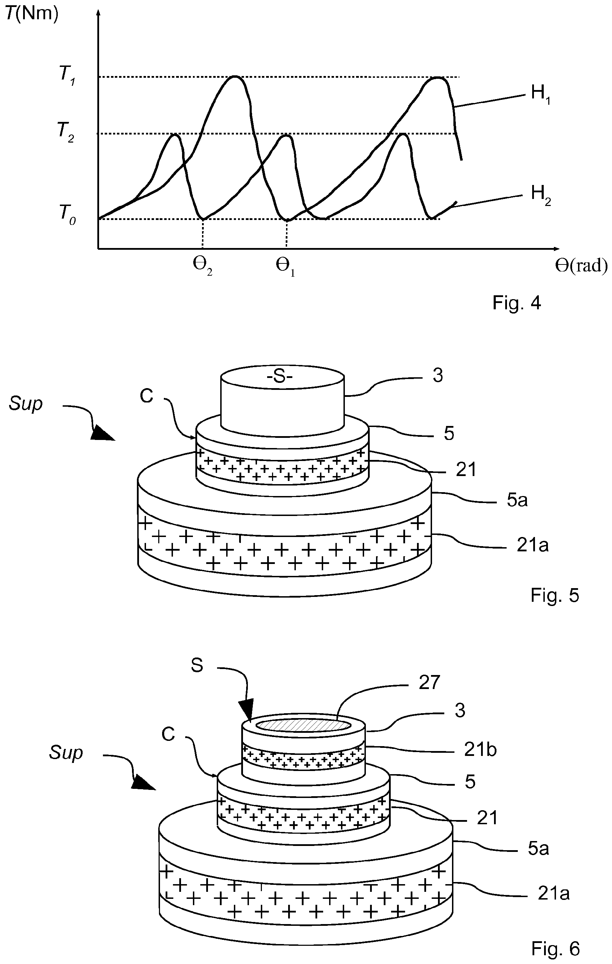

Des exemples de profils de retour haptique sont représentés en figure 4. La figure 4 montre un graphe du couple de retour T en newton-mètres (Nm) en fonction de l'angle de rotation θ en radians du plateau mobile 11 par rapport au plateau fixe 13, en particulier tel que mesuré par le détecteur de position 23, 25.

Le couple de retour T est piloté par l'unité de contrôle 19 lorsque celle-ci modifie l'alimentation *i* de l'électroaimant 17 et donc le champ magnétique *B* produit par ledit électroaimant 17.

Sur le graphe de la figure 4 sont représentés deux profils de retour haptiques H₁, H₂, correspondants à deux paramètres ou deux fonctions différentes que le dispositif de commande 1 permet de régler. Ces deux paramètres ou fonctions peuvent par exemple être la puissance et la température du flux d'air d'une climatisation du véhicule.

Le premier profil de retour haptique H₁ correspond par exemple à la puissance du flux d'air, et est le profil haptique appliqué en l'absence de détection tactile par le détecteur tactile capacitif 21, c'est-à-dire lorsque l'utilisateur actionne le dispositif de commande 1 en tournant la première molette 3.

Le profil de retour haptique H₁ commence à une valeur de couple basse T₀ qui est la valeur du couple résistif induit par le fluide magnétorhéologique 15 pris en cisaillement entre les éléments mobile 11 et fixe 13 en l'absence de champ magnétique *B.*

Lorsque θ augmente, c'est-à-dire lorsque l'utilisateur tourne la première molette 3, le couple de retour haptique T augmente progressivement jusqu'à atteindre une valeur maximale T₁ puis chute brusquement et retourne à la valeur initiale T₀ à un angle de rotation θ₁. Le premier profil de retour haptique H₁ se répète ensuite de façon périodique de période θ₁.

Ainsi les positions de l'organe de préhension *C* du dispositif de commande 1 correspondant aux angles précités, c'est-à-dire où θ = Nθ₁ avec N entier, définissent des positions d'indexage, où l'unité de contrôle 19 modifie un paramètre ou une fonction du véhicule.

L'utilisateur ressent en actionnant la première molette 3 un retour haptique au couple maximal T₁ sous forme de « clic » à chaque position d'indexage, c'est-à-dire à chaque fois qu'il tourne ladite première molette 3 d'un angle θ₁. Par exemple pour régler la puissance d'un flux d'air de climatisation à quatre niveaux de puissance et une position éteinte répartis sur un demi-tour de molette 3 l'angle θ₁ vaudra π/4.

Le second profil de retour haptique H₂ correspond par exemple à la température du flux d'air, et est le profil haptique appliqué en présence de détection de contact de l'utilisateur par le détecteur tactile capacitif 21, c'est-à-dire lorsque l'utilisateur actionne le dispositif de commande 1 en tournant la deuxième molette 5.

Le profil de retour haptique H₂ commence à la valeur de couple basse T₀ qui est typiquement la valeur du couple résistif induit par le fluide magnétorhéologique 15 pris en cisaillement entre les plateaux mobile 11 et fixe 13 en l'absence de champ magnétique *B*.

Lorsque θ augmente, c'est-à-dire lorsque l'utilisateur tourne la deuxième molette 5, le couple de retour haptique T augmente progressivement jusqu'à atteindre une valeur maximale T₂ puis chute brusquement et retourne à la valeur initiale T₀ à un angle de rotation θ₂. Le deuxième profil de retour haptique H₂ se répète ensuite de façon périodique de période θ₂.

Ainsi, les positions correspondant aux angles précités, c'est-à-dire où θ = Nθ₂ avec N entier, définissent des positions d'indexage, où l'unité de contrôle 19 modifie un paramètre ou une fonction du véhicule.

L'utilisateur ressent donc en actionnant la deuxième molette 5 un retour haptique au couple maximal T₂ sous forme de « clic » à chaque fois qu'une position d'indexage est atteinte, c'est-à-dire lorsqu'il tourne ladite deuxième molette 5 d'un angle θ₂. Par exemple pour un réglage de la température à un demi-degré Celsius (0,5°C) près dans une gamme de température de dix degrés Celsius (10°C) répartie sur un tour complet de molette, l'angle θ₂ vaut π/10.

La valeur de couple maximal T₂ du deuxième profil de retour haptique H₂ est plus basse que la première valeur maximale T₁ du premier profil de retour haptique H₁ ici d'environ 40 %, mais des valeurs identiques sont possibles bien qu'une différence relative de valeur maximale T₁, T₂ permette une différenciation nette des retours haptiques H₁, H₂.

Les angles θ₁, θ₂ auxquels les profils de retour haptique H₁, H₂ se répètent sont aussi différents, valant dans l'exemple respectivement π/4 et π/10. Les profils haptiques H₁, H₂ ressentis lorsque l'utilisateur actionne respectivement les première et deuxième molettes 3, 5 sont ainsi clairement différenciables, l'un présentant un couple de retour important T₁ lorsque la molette 3 est tournée d'un angle important θ₁ et l'autre présentant un couple de retour inférieur T₂ lorsque la molette 5 est tournée d'un angle inférieur θ₂.

Une différenciation par forme du motif des profils de retour haptique H₁, H₂ est aussi possible, avec un profil haptique avec des pics de couple rapprochés dans une même période par deux ou plus pour un ressenti de « double-clic » ou plus à chaque fois que le dispositif de commande 1 atteint une position d'indexage pour changer un paramètre ou une fonction.

Additionnellement, un effort de résistance élevé et constant peut être utilisé pour délimiter une butée ou un bout de course du dispositif de commande 1.

La figure 5 montre un mode de réalisation d'organe de préhension *C* de module de commande 1 selon un autre mode de réalisation.

Dans le mode de réalisation de la figure 5, l'organe de préhension *C* comporte les première et deuxièmes molettes ou zones de préhension 3, 5 ainsi qu'une troisième zone de préhension sous forme de troisième molette circulaire 5a, solidaire en rotation des premières 3, 5. Les deuxième et troisième molettes 5, 5a comportent chacune respectivement un capteur tactile 21, 21a ici sous forme d'une électrode d'un détecteur tactile capacitif, disposée sur la jupe de la molette 3, 5, 5a à laquelle elle est associée.

Lorsqu'aucun contact est détecté par les capteurs tactile 21, 21a le profil haptique de la fonction correspondant à la molette 3 ne comportant pas de capteur tactile 21, 21a est appliqué et la fonction ou le paramètre associé à ladite molette 3 est modifié en cas d'actionnement du dispositif de commande 1.

Un mode de réalisation à trois molettes 3, 5, 5a est indiqué dans le cas d'un système de climatisation à trois paramètres : puissance du flux d'air, température du flux d'air et sorties d'air privilégiées.

De manière générale un mode de réalisation à N zones de préhension 3, 5, 5a, où N est un nombre entier, peut être conçu avec N-1 capteurs tactiles 21, 21a sous forme d'électrodes de capteur capacitif, réparties sur toutes les zones de préhension 3, 5, 5a sauf une. En l'absence de détection tactile le profil haptique de la fonction correspondant à la zone de préhension ne comportant pas de capteur tactile 21, 21a est appliqué. La fonction ou le paramètre associé à ladite zone de préhension sans capteur tactile est alors modifié en cas d'actionnement du dispositif de commande 1. Les cas précédemment décrits correspondent à N = 2 pour les figures 1 et 2 et N = 3 pour la figure 5.

En figure 6 est représenté un organe de préhension *C* de dispositif de commande 1 selon un autre mode de réalisation. Dans ce mode de réalisation, chacune des trois zones de préhension 3, 5, 5a comporte un capteur tactile, respectivement 21b, 21, 21a.

Dans ce mode de réalisation, l'absence de détection d'actionnement par les capteurs tactile 21, 21a, 21b correspond à une absence d'utilisation du dispositif de commande 1. Une absence de détection d'actionnement, en particulier pendant une durée prédéterminée (trois secondes par exemple), peut être utilisée pour initier un basculement du dispositif de commande 1 dans un état de veille. L'unité de contrôle 19 est alors configurée pour faire basculer le dispositif de commande de l'état de veille à un état actif où la consommation électrique est plus importante lorsqu'un des capteurs tactile 21, 21a, 21b détecte l'actionnement par l'utilisateur d'une des zones de préhension 3, 5, 5a.

Par état de veille, on entend un état dans lequel au moins une partie des composants consommant du courant sont désactivés. Dans le cas du dispositif de commande 1 tel que précédemment décrit, ce peut être l'électroaimant 17, le capteur à effet Hall 23, et un ou plusieurs circuit de transformation pour l'alimentation du dispositif de commande 1.

Sur la figure 6 le dispositif de commande 1 comporte en outre un dispositif d'affichage 27, disposé sur la surface S frontale de la première molette 3.

Le dispositif d'affichage 27 peut comporter un ou plusieurs des éléments suivants : un écran à cristaux liquides, une ou plusieurs sources lumineuses et guides de lumière avec une ou plusieurs surfaces d'affichage formant un motif visuel associées, et vers lesquelles les guides de lumière guident de la lumière issue des sources lumineuses, et/ou un écran à diodes électroluminescentes, à cristaux liquides, à diodes électroluminescentes organiques (OLED), ou bien à transistors en couches minces (TFT).

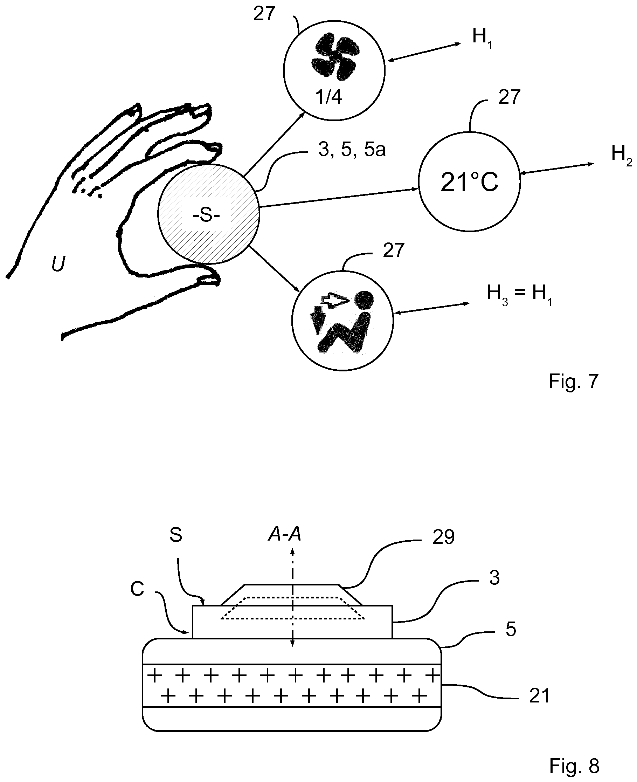

Un tel dispositif d'affichage 27 est alors avantageusement aussi désactivé au moins partiellement lors d'un basculement en mode veille du dispositif de commande 1. Le dispositif d'affichage 27 peut être utilisé à des fins esthétiques, mais aussi pour afficher des données relatives aux paramètres et fonctions contrôlées par le dispositif de commande 1, comme il est montré en figure 7.

En figure 7 est représentée la main d'un utilisateur *U* qui actionne une des molettes 3, 5, 5a. Le dispositif d'affichage 27 est initialement désactivé, de sorte que la surface frontale S apparaît unie, et de préférence de la même couleur que la surface de l'habitacle dans laquelle la partie inférieure *Inf* du dispositif de commande 1 est insérée.

Lorsque la main de l'utilisateur *U* entre en contact avec l'une des molettes 3, 5, 5a du dispositif de commande 1, le capteur tactile 21, 21a, 21b de la molette 3, 5, 5a que l'utilisateur *U* est en train d'entraîner en rotation détecte le contact avec la main de l'utilisateur *U.* le dispositif de commande 1 bascule alors de l'état de veille à un état actif, où le module de retour haptique 9 et le dispositif d'affichage 27 sont alimentés.

En fonction du capteur tactile 21, 21a ou 21b qui a détecté l'actionnement par la main de l'utilisateur *U,* une fonction ou un paramètre particulier est modifié. Le dispositif d'affichage 27 peut alors afficher une donnée relative audit paramètre ou à ladite fonction.

Dans le cas de la figure 7, le dispositif de commande 1 est utilisé pour contrôler la fonction de climatisation du véhicule, qui comporte dans le cas discuté trois paramètres : l'intensité du flux d'air, la température du flux d'air, la sortie d'air privilégiée. Selon la zone de préhension ou molette 3, 5, 5a actionnée par l'utilisateur *U,* le dispositif d'affichage 27 est contrôlé par l'unité de contrôle 19 et affiche des données relatives à la fonction contrôlée par la molette 3, 5, 5a et correspondant au profil de retour haptique appliqué par ladite unité de contrôle 19.

Si l'utilisateur *U* actionne la première molette 3, le détecteur 21b associé est déclenché, et le dispositif de commande 1 bascule dans un état actif, et le dispositif d'affichage 27 est allumé. La première molette 3 correspondant par exemple à la puissance du flux d'air, le dispositif d'affichage 27 affiche alors un pictogramme indicatif du paramètre en cours de modification, ici une hélice de ventilateur, et une donnée d'état actuel, ici 1/4 pour indiquer à l'utilisateur que la puissance actuelle du flux d'air est la première de quatre possibles.

Si l'utilisateur *U* actionne la deuxième molette 5, le détecteur 21 associé est déclenché, et le dispositif de commande 1 bascule dans un état actif, le dispositif d'affichage 27 est alors allumé. La deuxième molette 5 correspondant par exemple à la température du flux d'air, le dispositif d'affichage 27 affiche alors une température de consigne du flux d'air, ici 21°C.

Si l'utilisateur *U* actionne la troisième molette 5a, le détecteur 21a associé est déclenché, et le dispositif de commande 1 bascule dans un état actif, et le dispositif d'affichage 27 est allumé. La troisième molette 5a correspondant par exemple à la sortie d'air privilégiée, le dispositif d'affichage 27 affiche alors un pictogramme indicatif des sorties d'air par lesquelles le flux d'air est injecté dans l'habitacle du véhicule. Ce pictogramme est ici un personnage assis symbolisant un occupant du véhicule, et deux flèches dirigées respectivement vers le haut et le bas du corps du personnage assis.

Dans l'exemple de la figure 7, la flèche pointant vers le bas du corps du personnage assis est représentée pleine, celle pointant vers le haut étant représentée creuse, pour symboliser un état de fonctionnement où seules les sorties d'air dirigées vers le bas de l'habitacle et donc le bas du corps des occupants du véhicule sont alimentées.

Pour les sorties d'air privilégiées, le profil haptique H₃ peut être identique au profil haptique de la puissance de flux H₁ si le nombre d'états possibles est identique. Ici ces états sont : éteint, haut de l'habitacle, bas de l'habitacle, haut et bas de l'habitacle, pare-brise (anti-buée) soit cinq états possibles pour les sorties d'air, à faire correspondre à éteint, premier, deuxième, troisième et quatrième niveau de puissance soit cinq états possibles dans le cas de la puissance du flux d'air.

Des dispositifs d'affichage 27 plus simples, par exemple comportant un guide de lumière, une ou plusieurs sources lumineuses et des surfaces d'affichage formant motif d'affichage tel que des segments radiaux et des anneaux délimitant la périphérie des zones de préhension des molettes 3, 5, 5a peuvent être ajoutés sur les surfaces frontales annulaires des zones de préhension des deuxième et troisième molettes 5, 5a et sur les jupes portant les capteurs tactile 21, 21a, 21b pour améliorer la visibilité du dispositif de commande 1 et de la position rotative θ dans laquelle il se trouve, notamment pour la conduite de nuit.

Avantageusement, de tels dispositifs d'affichage 27 à guide de lumière sont allumés lorsque l'habitacle entre en mode nocturne, où les éclairages intérieurs sont adaptés à l'obscurité ambiante, et soulignent les dispositifs essentiels de l'habitacle. Un tel mode nocturne est typiquement déclenché lorsque les phares du véhicule sont allumés, ou bien qu'un détecteur de lumière ambiante détecte un niveau de luminosité bas prédéfini.

Les bords des molettes 3, 5, 5a formant des jupes sur lesquelles sont disposés les capteurs tactile 21, 21a, 21b sont représentés tubulaires, mais des formes plus complexes, avec des motifs par exemple en crantage ou à bosses, permettant une meilleure préhension peuvent être utilisés.

Le dispositif de commande 1 peut en outre être relié, notamment par l'unité de contrôle 19, à un écran d'interface, généralement disposé sur une console centrale de l'habitacle, entre le conducteur et le passager. L'écran d'interface peut alors afficher tout ou partie des données relatives au paramètre affichée par le dispositif d'affichage 27, soit en redondance soit en lieu et place du dispositif d'affichage 27.

Le dispositif de commande 1 peut aussi être relié, en particulier via l'unité de contrôle 19, à un système audio dédié ou bien au système audio de bord du véhicule pour associer un ou plusieurs sons au profils de retour haptique qui informent le conducteur de la prise en compte de l'actionnement du dispositif de commande 1. De tels sons peuvent notamment comprendre un ou plusieurs « clic » audio qui se superposent aux pics de couple T résistif, et des annonces enregistrées des informations d'état actuel et de la fonction ou du paramètre en cours de modification.

Le dispositif de commande 1 peut aussi être relié via l'unité de contrôle 19 à un ou plusieurs détecteurs d'approche ou capteurs de geste, dédiés ou utilisés dans le cadre d'un module d'interface central, en particulier pour basculer le dispositif de commande d'un état de veille à un état actif lorsque l'utilisateur approche

En figure 8 est représenté un mode de réalisation supplémentaire de dispositif de commande 1, dont seule la partie supérieure *Sup* est représentée en vue de profil. le dispositif de commande 1 représenté comporte ici une première et une deuxième zone de préhension 3 et 5, qui sont ici des molettes circulaires, disposées de façon concentrique l'une au dessus de l'autre. La première molette 3 comporte une surface frontale S dirigée vers l'utilisateur.

Le dispositif de commande de la figure 8 comporte en outre un dispositif de commande en translation 29, de forme générale tubulaire et mobile axialement selon un axe *A-A* entre au moins une position de repos et une position d'enfoncement, ici respectivement haute (en traits pleins) et basse (en pointillés), et qui est disposé sur la surface frontale S, au centre des molettes concentriques 3, 5 et traverse la partie supérieure *Sup.*

Avantageusement, l'unité de contrôle 19 est configurée pour modifier le profil de retour haptique du dispositif de commande 1 selon la position d'enfoncement du dispositif de commande en translation 29. Par exemple, lorsque le dispositif de commande en translation 29 est en position de repos, le dispositif de commande 1 peut être utilisé pour contrôler la climatisation du véhicule, comme précédemment décrit, et lorsque le dispositif de commande en translation 29 est en position d'enfoncement, le dispositif de commande 1 peut être utilisé pour contrôler un autoradio ou un assistant de navigation. Les profils haptiques H1, H2 sont alors modifiés pour correspondre aux différents paramètres contrôlés.

Ledit dispositif de commande en translation 29 peut servir de support pour le dispositif d'affichage 27, dont l'état d'affichage sera adapté par l'unité de contrôle 19 au basculement des fonctions contrôlées selon la position haute ou basse du dispositif de commande en translation 29. L'actionnement du dispositif de commande en translation 29 peut aussi servir à faire basculer le module de commande 1 d'un état de veille à un état actif.

En alternative, la totalité de l'organe de préhension *C* formant la partie supérieure *Sup* peut être mobile en translation entre une position de repos et une position d'enfoncement de sorte que ladite partie supérieure *Sup* forme l'organe de commande enfoncé par l'utilisateur pour actionner le dispositif de commande en translation 29.

D'autres modes de réalisation sont possibles, dans lesquels les surfaces de préhension ne sont pas liées à des molettes 3, 5 étagées. Par exemple, la surface frontale *S* peut porter un capteur tactile 21 au moins autour d'un renfoncement dans lequel l'utilisateur appuie la pointe de son doigt, et la jupe de l'organe de préhension *C* peut alors porter un deuxième capteur tactile 21. Ainsi, selon si l'utilisateur actionne le dispositif de commande 1 en appuyant son doigt sur la surface frontale *S* ou bien en saisissant l'organe de préhension *C* par sa jupe axiale, un paramètre différent peut être contrôlé, et un profil de retour haptique adapté peut être appliqué.

En particulier dans un tel mode de réalisation, la détection du contact d'un utilisateur *U* simultanément sur deux surfaces de préhension 3, 5, 5a différentes peut être utilisée pour modifier un paramètre supplémentaire et appliquer un troisième profil de retour haptique.

L'invention permet donc d'obtenir un dispositif de commande 1 compact, qui offre un accès direct à plusieurs paramètres ou fonctions, avec des retours haptiques différents pour chaque paramètre ou fonction contrôlé. Les dispositifs de commandes 1 selon l'invention peuvent aisément être intégrés dans un habitacle de véhicule et ont un fort potentiel de personnalisation esthétique pour les constructeurs.

## Revendications

1. Dispositif de commande comprenant un organe de préhension (*C*) mobile en rotation autour d'un axe de rotation, et un capteur de rotation (23, 25) dudit organe de préhension (*C*), l'organe de préhension (*C*) comportant au moins deux zones de préhensions distinctes (3, 5, 5a) destinées à être actionnées pour mettre en rotation l'organe de préhension (*C*), au moins un capteur tactile (21, 21a, 21b) associé à une des zones de préhension (3, 5, 5a) et configuré pour détecter un actionnement par un utilisateur interagissant avec la zone de préhension (3, 5, 5a) associée et une molette circulaire étagée, **caractérisé en ce que** chaque étage de la molette circulaire étagée est associé à une zone de préhension (3, 5, 5a) correspondante.

2. Dispositif de commande selon la revendication 1, **caractérisé en ce que** chaque zone de préhension (3, 5, 5a) possède une forme de bande cylindrique.

3. Dispositif de commande selon la revendication 1 ou 2, **caractérisé en ce qu'**il comporte trois zones de préhension (3, 5, 5a).

4. Dispositif de commande selon l'une au moins des revendications précédentes, **caractérisé en ce que** le au moins un capteur tactile (21, 21a, 21b) est réalisé sous forme de détecteur capacitif.

5. Dispositif de commande selon l'une au moins des revendications précédentes, **caractérisé en ce que** les capteurs tactiles (21, 21a, 21b) comportent plusieurs électrodes disposées chacune sur une zone de préhension distincte.

6. Dispositif de commande selon l'une au moins des revendications précédentes, **caractérisé en ce que** toutes les zones de préhension sauf une sont pourvues de capteurs tactiles (21, 21a).

7. Dispositif de commande selon l'une au moins des revendications précédentes, **caractérisé en ce que** toutes les zones de préhension (3, 5, 5a) sont pourvues de capteurs tactiles (21, 21a, 21b) et **en ce qu'**il comporte une unité de contrôle (19) configurée pour faire basculer le dispositif de commande d'un état de veille à un état actif de commande.

8. Dispositif de commande selon l'une des revendications précédentes, **caractérisé en ce qu'**il comporte en outre un organe de commande en translation (29), mobile en translation axiale entre au moins une position de repos et une position d'enfoncement.

9. Dispositif de commande selon la revendication 8, **caractérisé en ce que** l'organe de préhension (*C*) est aussi mobile en translation axiale pour former un organe de commande en translation (29) mobile en translation axiale entre au moins une position de repos et une position d'enfoncement.

10. Dispositif de commande selon l'une des revendications précédentes, **caractérisé en ce qu'**il comporte en outre un dispositif d'affichage (27) disposé au niveau del'organe de préhension (*C*) et dont un état d'affichage est contrôlé par une unité de contrôle (19).

11. Dispositif de commande selon la revendication 10, **caractérisé en ce que** le dispositif d'affichage (27) est configuré pour afficher une donnée relative au paramètre contrôlé par l'actionnement d'une des zones de préhension (3, 5, 5a) lorsque l'utilisateur est en contact avec ladite zone de préhension (3, 5, 5a).

12. Dispositif de commande selon la revendication 10 ou 11, **caractérisé en ce que** le dispositif d'affichage (27) comporte une source lumineuse, un guide de lumière et une surface d'affichage (*S*) comportant un motif visuel, surface d'affichage (*S*) vers laquelle le guide de lumière guide de la lumière issue de la source lumineuse.

13. Dispositif de commande selon l'une des revendications 10, 11 ou 12, **caractérisé en ce que** le dispositif d'affichage (27) comporte un écran à cristaux liquides.

14. Dispositif de commande, selon l'une des revendications précédentes, **caractérisé en ce qu'**il comporte en outre :
- un module de retour haptique (9) pouvant fournir au moins deux profils de retour haptique (H1, H2) différents,
- une unité de contrôle (19) définissant le profil de retour haptique (H₁, H₂) fourni par le module de retour haptique (9), configurée pour modifier le profil de retour haptique (H₁, H₂) en fonction de la zone de préhension actionnée par l'utilisateur.

15. Dispositif de commande selon la revendication 13 ou 14, **caractérisé en ce que** le module de retour haptique (9) est un module de retour haptique à fluide magnétorhéologique comportant un fluide magnétorhéologique (15) disposé entre un élément mobile (11) solidaire de l'organe de préhension (*C*) et un élément fixe (13) solidaire d'un châssis sur lequel le dispositif de commande est disposé, et au moins un électroaimant (17) alimenté par l'unité de contrôle (19) pour définir le profil de retour haptique (H₁, H₂).

## Patentansprüche

1. Bedienvorrichtung, umfassend ein um eine Drehachse drehbewegliches Greifelement (C) und einen Drehsensor (23, 25) des Greifelements (C), wobei das Greifelement (C) mindestens zwei verschiedene Greifbereiche (3, 5, 5a) beinhaltet, die dazu bestimmt sind, betätigt zu werden, um das Greifelement (C) in Drehung zu versetzen, mindestens einen berührungsempfindlichen Sensor (21, 21a, 21b), der einem der Greifbereiche (3, 5, 5a) zugeordnet ist und dazu ausgestaltet ist, eine Betätigung durch einen Benutzer zu detektieren, der mit dem zugeordneten Greifbereich (3, 5, 5a) interagiert, und ein abgestuftes rundes Rändelrad, **dadurch gekennzeichnet, dass** jede Stufe des abgestuften runden Rändelrades einem entsprechenden Greifbereich (3, 5, 5a) zugeordnet ist.

2. Bedienvorrichtung nach Anspruch 1, **dadurch gekennzeichnet, dass** jeder Greifbereich (3, 5, 5a) die Form eines zylindrischen Streifens besitzt.

3. Bedienvorrichtung nach Anspruch 1 oder 2, **dadurch gekennzeichnet, dass** sie drei Greifbereiche (3, 5, 5a) beinhaltet.

4. Bedienvorrichtung nach mindestens einem der vorhergehenden Ansprüche, **dadurch gekennzeichnet, dass** der mindestens eine berührungsempfindliche Sensor (21, 21a, 21b) in Form eines kapazitiven Detektors ausgeführt ist.

5. Bedienvorrichtung nach mindestens einem der vorhergehenden Ansprüche, **dadurch gekennzeichnet, dass** die berührungsempfindlichen Sensoren (21, 21a, 21b) mehrere Elektroden beinhalten, von denen jede auf einem anderen Greifbereich angeordnet ist.

6. Bedienvorrichtung nach mindestens einem der vorhergehenden Ansprüche, **dadurch gekennzeichnet, dass** alle Greifbereiche bis auf einen mit berührungsempfindlichen Sensoren (21, 21a) versehen sind.

7. Bedienvorrichtung nach mindestens einem der vorhergehenden Ansprüche, **dadurch gekennzeichnet, dass** alle Greifbereiche (3, 5, 5a) mit berührungsempfindlichen Sensoren (21, 21a, 21b) versehen sind und dass sie eine Steuerungseinheit (19) beinhaltet, die dazu ausgestaltet ist, die Bedienvorrichtung aus einem Bereitschaftszustand in einen aktiven Bedienzustand wechseln zu lassen.

8. Bedienvorrichtung nach einem der vorhergehenden Ansprüche, **dadurch gekennzeichnet, dass** sie ferner ein translatorisches Bedienelement (29) beinhaltet, das zwischen mindestens einer Ruhestellung und einer gedrückten Stellung axial translatorisch beweglich ist.

9. Bedienvorrichtung nach Anspruch 8, **dadurch gekennzeichnet, dass** das Greifelement (C) ebenfalls axial translatorisch beweglich ist, um ein translatorisches Bedienelement (29) zu bilden, das zwischen mindestens einer Ruhestellung und einer gedrückten Stellung axial translatorisch beweglich ist.

10. Bedienvorrichtung nach einem der vorhergehenden Ansprüche, **dadurch gekennzeichnet, dass** sie ferner eine Anzeigevorrichtung (27) beinhaltet, die am Greiforgan (C) angeordnet ist und deren Anzeigezustand von einer Steuerungseinheit (19) gesteuert wird.

11. Bedienvorrichtung nach Anspruch 10, **dadurch gekennzeichnet, dass** die Anzeigevorrichtung (27) dazu ausgestaltet ist, ein Datenelement bezüglich des durch das Betätigen eines der Greifbereiche (3, 5, 5a) gesteuerten Parameters anzuzeigen, wenn der Benutzer mit dem Greifbereich (3, 5, 5a) in Kontakt ist.

12. Bedienvorrichtung nach Anspruch 10 oder 11, **dadurch gekennzeichnet, dass** die Anzeigevorrichtung (27) eine Lichtquelle, einen Lichtleiter und eine Anzeigefläche (S) mit einem visuellen Motiv beinhaltet, wobei der Lichtleiter das von der Lichtquelle kommende Licht zu der Anzeigefläche (S) leitet.

13. Bedienvorrichtung nach einem der Ansprüche 10, 11 oder 12, **dadurch gekennzeichnet, dass** die Anzeigevorrichtung (27) ein Flüssigkristalldisplay beinhaltet.

14. Bedienvorrichtung nach einem der vorhergehenden Ansprüche, **dadurch gekennzeichnet, dass** sie ferner beinhaltet:
- ein haptisches Rückkopplungsmodul (9), das mindestens zwei verschiedene haptische Rückkopplungsprofile (H1, H2) ausgeben kann,
- eine Steuerungseinheit (19), die das vom haptischen Rückkopplungsmodul (9) ausgegebene haptische Rückkopplungsprofil (H₁, H₂) definiert und dazu ausgestaltet ist, das haptische Rückkopplungsprofil (H₁, H₂) in Abhängigkeit von dem vom Benutzer betätigten Greifbereich zu ändern.

15. Bedienvorrichtung nach Anspruch 13 oder 14, **dadurch gekennzeichnet, dass** das haptische Rückkopplungsmodul (9) ein haptisches Rückkopplungsmodul mit magnetorheologischer Flüssigkeit ist, das eine magnetorheologische Flüssigkeit (15) beinhaltet, die zwischen einem mit dem Greiforgan (C) fest verbundenen beweglichen Teil (11) und einem mit einem Rahmen, an dem die Bedienvorrichtung angeordnet ist, fest verbundenen ortsfesten Teil (13) angeordnet ist, und mindestens einen Elektromagneten (17), der von der Steuerungseinheit (19) gespeist wird, um das haptische Rückkopplungsprofil (H₁, H₂) zu definieren.

## Claims

1. Control device comprising a grip member (C) that is mobile in rotation about an axis of rotation, and a rotation sensor (23, 25) for detecting the rotation of said grip member (C), the grip member (C) comprising at least two distinct grip regions (3, 5, 5a) that are intended to be actuated to rotate the grip member (C), at least one tactile sensor (21, 21a, 21b) that is associated with one of the grip regions (3, 5, 5a) and is configured to detect actuation by a user interacting with the associated grip region (3, 5, 5a) and a stepped circular knob, **characterized in that** each step of the stepped circular knob is associated with a corresponding grip region (3, 5, 5a).

2. Control device according to Claim 1, **characterized in that** each grip region (3, 5, 5a) is in the form of a cylindrical band.

3. Control device according to Claim 1 or 2, **characterized in that** it comprises three grip regions (3, 5, 5a).

4. Control device according to any one of the preceding claims, **characterized in that** the at least one tactile sensor (21, 21a, 21b) is in the form of a capacitive sensor.

5. Control device according to any one of the preceding claims, **characterized in that** the tactile sensors (21, 21a, 21b) comprise multiple electrodes each arranged on a different grip region.

6. Control device according to any one of the preceding claims, **characterized in that** all of the grip regions but one are provided with tactile sensors (21, 21a).

7. Control device according to any one of the preceding claims, **characterized in that** all of the grip regions (3, 5, 5a) are provided with tactile sensors (21, 21a, 21b) and **in that** it comprises a control unit (19) that is configured to make the control device switch from a standby state to an active control state.

8. Control device according to any one of the preceding claims, **characterized in that** it further comprises a member for control in translation (29), which is able to move in axial translation between at least a rest position and a depressed position.

9. Control device according to Claim 8, **characterized in that** the grip member (C) is also mobile in axial translation to form a member for control in translation (29) that is able to move in axial translation between at least a rest position and a depressed position.

10. Control device according to any one of the preceding claims, **characterized in that** it further comprises a display device (27) which is arranged at the grip member (C) and of which a display state is controlled by a control unit (19).

11. Control device according to Claim 10, **characterized in that** the display device (27) is configured to display information relating to the parameter controlled by actuation of one of the grip regions (3, 5, 5a) when the user is in contact with said grip region (3, 5, 5a).

12. Control device according to Claim 10 or 11, **characterized in that** the display device (27) comprises a light source, a light guide and a display surface (S) comprising a visual pattern, the light guide guiding the light from the light source to the display surface (S).

13. Control device according to one of Claims 10, 11 and 12, **characterized in that** the display device (27) comprises a liquid crystal screen.

14. Control device according to one of the preceding claims, **characterized in that** it further comprises:
- a haptic feedback module (9) that can provide at least two different haptic feedback profiles (H1, H2),
- a control unit (19) defining the haptic feedback profile (H₁, H₂) provided by the haptic feedback module (9), configured to modify the haptic feedback profile (H₁, H₂) depending on the grip region actuated by the user.

15. Control device according to Claim 13 or 14, **characterized in that** the haptic feedback module (9) is a magnetorheological fluid haptic feedback module comprising a magnetorheological fluid (15) arranged between a mobile element (11) secured to the grip member (C) and a fixed element (13) secured to a chassis on which the control device is arranged, and at least one electromagnet (17) that is powered by the control unit (19) to define the haptic feedback profile (H₁, H₂).
